# EUROPEAN PATENT SPECIFICATION

(11) **EP 3 967 436 B1**
(45) Date of publication and mention of the grant of the patent: **25.10.2023**
(21) Application number: 21382816.3
(22) Date of filing: 10.09.2021
(51) Int. Cl.: B23K 11/00, B23K 11/14, B23K 11/31, B23K 11/36

(54) **COMPONENT FEED SYSTEM FOR PRESS WELDERS FOR RESISTANCE WELDING, AND PRESS WELDER COMPRISING SAID SYSTEM**
BAUTEILZUFÜHRUNGSSYSTEM FÜR PRESSSCHWEISSGERÄTE ZUM WIDERSTANDSSCHWEISSEN UND PRESSSCHWEISSGERÄT MIT DIESEM SYSTEM
SYSTÈME D'ALIMENTATION EN COMPOSANTS DE PRESSES À SOUDER POUR LE SOUDAGE PAR RÉSISTANCE ET PRESSE À SOUDER COMPRENANT LEDIT SYSTÈME

(30) Priority: 11.09.2020 ES 202030928
(43) Date of publication of application: 16.03.2022
(73) Proprietor: Bosco Tecnoindustria S.L., 47151 Valladolid (ES)
(72) Inventor: PITA GÓMEZ, Santiago, 47012 Valladolid (ES)
(74) Representative: Tribalyte Ideas

(56) References cited:
- GB-A- 1 466 015
- JP-A- H0 938 780
- US-A- 4 789 768

## Description

### FIELD OF THE INVENTION

The present invention relates to the sector of industrial and mechanical engineering, and more particular to a component feed system for a press welder for resistance welding and to a press welder comprising such feed system (see claims 1 and 10). More specifically, the invention relates to industrial resistance welding techniques used for welding components, such as nuts of different shapes and sizes, onto other metal elements of a different nature and various thicknesses, such as sheets of sheet metal.

### BACKGROUND OF THE INVENTION

The resistance welding technique is used abundantly in different industries, preferably for fixing small sized metal components, such as nuts, to larger sized elements, preferably metal elements, such as sheets of sheet metal. Said technique is also applied for attaching components to a surface and for welding adjacent laminar elements when same are to be attached to one another.

Typically, resistance welding methods comprise the placement of two components between two electrodes, wherein one of said electrodes is arranged in a lower fixed position, and the other electrode is a movable element, located in a lower position. The pressure applied by the upper electrode on the lower electrode, with the components to be welded being arranged between both, favors the welding thereof, by passing electric current at a predetermined time between the two electrodes. The electrical resistance existing between the contacting surfaces of the two components and the high current passing between the electrodes produces a very large amount of heat that locally melts the material of the components, the welding thereby being performed. In this welding method, the parameters of electric current circulation time and the pressure exerted by the electrodes on the components to be welded are therefore fundamental.

As mentioned, the resistance welding technique typically involves welding two components of a different size, such as for example nuts on the surface of a piece of sheet metal having a certain dimension. In these cases, the large sheet metal component is usually positioned in a lower position on the lower electrode, and the small component, consisting of the nut, is loaded manually or semi-automatically, by means of pistons or shuttle devices which allow the nut to be placed on the larger sized component before pressing, with the electrodes, both components and welding them together. Some examples of these nut feed systems are described in patent application WO 2007/074561 A1 or in patents US 6,825,436 and KR 101200541 B1. Furthermore, there are also some automatic nut feed systems, comprising the use of robotic cells. In these cells, a robot loads and unloads the components.

Although the mentioned nut feed systems, or generally feed systems for small sized components allow processes to speed up when working on a welding line (i.e., when multiple consecutive welding operations are performed on an industrial assembly or production line), said systems still present considerable limitations which remain unresolved in the state of the art:
On one hand, the most widely used systems, which are based on feeding by means of rod-shuttle, comprise the use of a component feeder which supplies the nuts, causing said nuts to reach the shuttle through a tube. Said tube has a specific design based on the nut used so as to secure the position of the nut when it reaches the shuttle held in the press. With this configuration, nuts are supplied from the automatic feeder by blowing into the tube, whereby the component is loaded into the press. Likewise, the shuttle presents a rod that moves, moving forward so as to position the nut on a centering pin arranged in the lower electrode. At that time, the upper electrode must remain moved backward, leaving enough space for performing the method of feeding the component. Once the nut has been deposited, the rod in the shuttle moves backward. Therefore, until the shuttle has been moved backward completely, the upper electrode cannot start to move forward, initiating the welding operation, such that the upper electrode moves downwards, moving forward until pressing the nut and welding it to the larger sized component.

Other known semiautomatic feed systems for press welders are disclosed, for instance, in patent applications GB 1466015 A (describing al the features of the preamble of claims 1 and 9 respectively), US 4789768 A and JP H0938780 A. However, these systems lack effective means for synergistically couple the feeding operations to the action of the press-welder cylinders during the welding operations. Thus, these systems can lead to mechanical malfunctioning when the linear displacement of the cylinders does not correctly fit to the feeding frequency of the metal components.

Semiautomatic feed systems are therefore excessively slow in their application to industries in which production speed must be high, as in the case of the automobile industry, and can lead to malfunctioning errors when the cylinder displacement operation mechanically decouples from the feeding operations. Furthermore, this sector requires a high degree of specialization in the production process, which primarily targets decreasing the number of faults ("zero errors") and reducing cycle times in the nut welding process. In order to meet the abovementioned needs, the present invention proposes a novel direct nut feed system for press welders for resistance welding, which replaces and substantially improves the systems with a shuttle described above.

### BRIEF DESCRIPTION OF THE INVENTION

In light of the problems of the state of the art set forth in the preceding section, a component feed system according to the present invention is defined in claim 1.

As a result of the system of the invention, the times of each welding cycle are significantly reduced, assuring the quality of the component and its correct positioning, and therefore obtaining an improved productivity. An increase in production efficiency is thereby obtained, as well as a precision of the feed of at least the 99%, further assuring the centering of the nut, are thereby obtained. Furthermore, the system of the invention can be applied both in manual and robotic welding.

According to the present invention, the component feed system further comprises a guide cylinder connected to the head, wherein said guide cylinder is in an integral manner attached to the welding cylinder through an attachment element adapted for that purpose. The guide cylinder thereby moves the same way the welding cylinder does in its forward and backward positions.

Further according to the present invention, the connection between the guide cylinder and the head is performed by means of a guide piston, wherein said piston can move relative to the guide cylinder, along an axis substantially parallel to the axis of movement of the welding cylinder.

And further according to the present invention, the guide piston comprises a movement stop. By means of the use of said stop, a retention position for the guide piston is configured, after which said piston is moved backward relative to the guide cylinder given the forward movement of the welding cylinder and of the upper electrode, relative to the lower electrode.

In a preferred embodiment of the invention, the opening mechanism for opening the clamps comprises respective springs connected to same. Said springs are preferably configured for returning the clamps to their closed position when said clamps are not in contact with the upper electrode during welding operations.

In another preferred embodiment of the invention, the opening mechanism for opening the clamps comprises respective cam tracks along which respective bearings connected to the mentioned clamps run. With this configuration, the relative position between the welding cylinder and the guide cylinder defines the position of the bearings along the cam tracks, therefore operating the opening of the clamps along the downward path of the welding cylinder. Conversely, when said welding cylinder moves backward, this will operate the closing of the clamps as the bearings run along the opposite path in the cam tracks.

In another preferred embodiment of the invention, the opening mechanism for opening the clamps comprises a manual opening mechanism, performed for example with a regulating device for regulating the position of said clamps, through a wing nut type closure, or any similar element.

In another preferred embodiment of the invention, the tube and the head are connected through a chute. More preferably, the tube and/or the chute present a cross-section adapted to the shape of the fed components.

In another preferred embodiment of the invention, the feed system comprises a cam-type nut metering mechanism, suitable for separating the fed components on a feed path. More preferably, said cam-type mechanism is connected to a detector, preferably an inductive detector, suitable for detecting the number of feed components located in a given portion of the chute, and/or to a detector, preferably a magnetic detector, suitable for detecting the position of the welding cylinder. It is thereby possible to configure the metering regimen of the cam mechanism based on the number of accumulated components or on the position of the mentioned cylinder during welding operations.

In another preferred embodiment of the invention, the axis of movement of the welding cylinder is substantially vertical.

In another preferred embodiment of the invention, the component feeding equipment comprises a blow feeder. More preferably, the component feeder is an automatic feeder.

A second object of the invention relates to a press welder for resistance welding as defined in claim 10.

In a preferred embodiment of the invention, said press welder further comprises a robotic subsystem for the placement of reciprocal components relative to the fed components fed by the feed system, said subsystem being configured for arranging said reciprocal components on the lower electrode. Alternatively, the press welder can comprise a manual subsystem for the placement of said reciprocal components.

In the scope of the present invention, the expression "substantially" will be interpreted to mean identical or comprised within a variation margin of ±5%.

### DESCRIPTION OF THE DRAWINGS

The aforementioned and other features and advantages will become more apparent based on the detailed description of the invention, as well as of the preferred embodiments referring to the attached figures, which are described in the paragraphs included below.

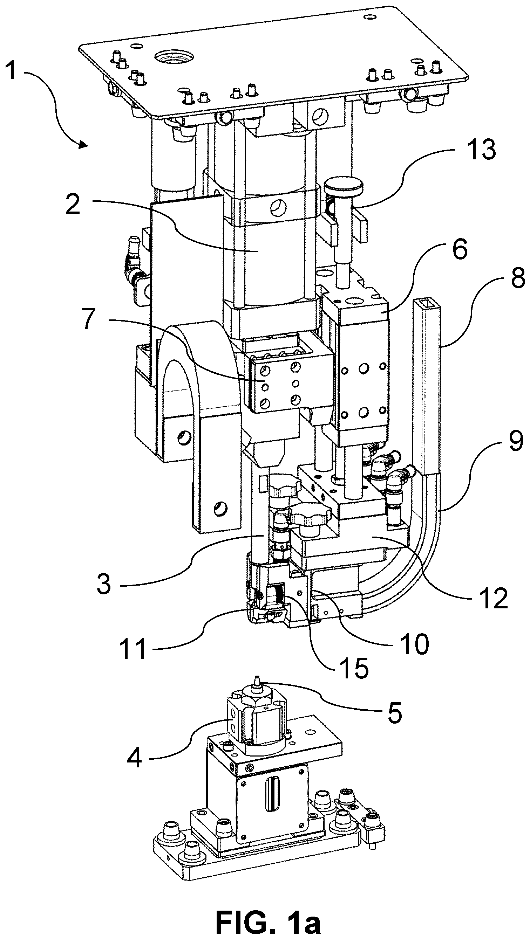

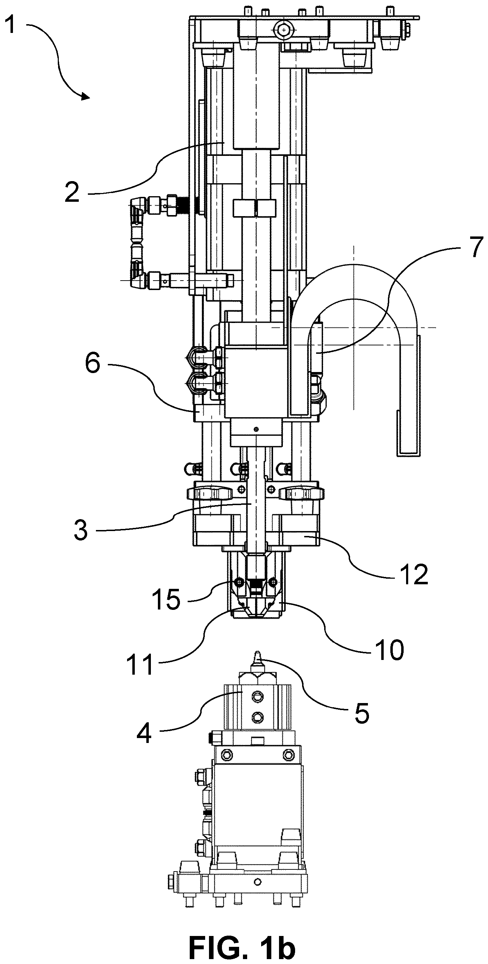

Figures 1a-1b show general profile and perspective views, respectively, of the component feed system for press welders for resistance welding claimed in the present invention, for a preferred embodiment thereof. Namely, in Figure 1b it can be seen how the upper electrode of welding partially occupies the component housing space configured by the head and the clamps of the feed system, with said clamps remaining in the closed position.

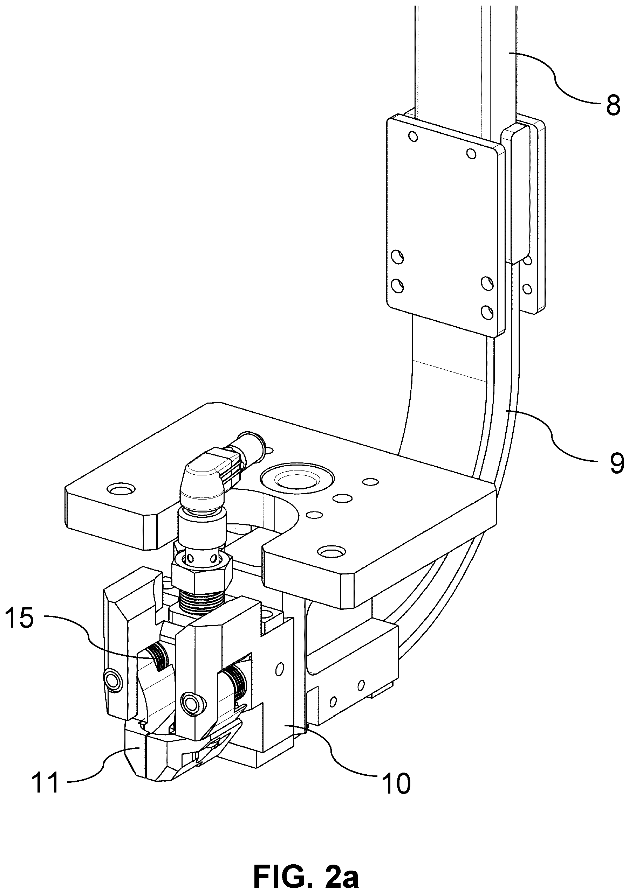

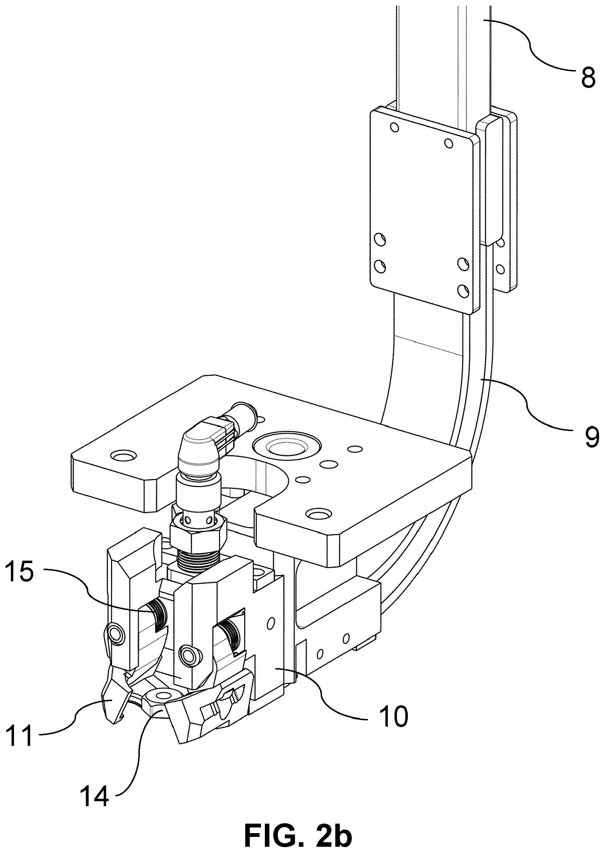

Figures 2a-2b show two detailed perspective views of the feed system of the invention, in a first preferred embodiment thereof. In said figures, the head of said system comprises a pair of housing clamps in the opened and closed position, respectively.

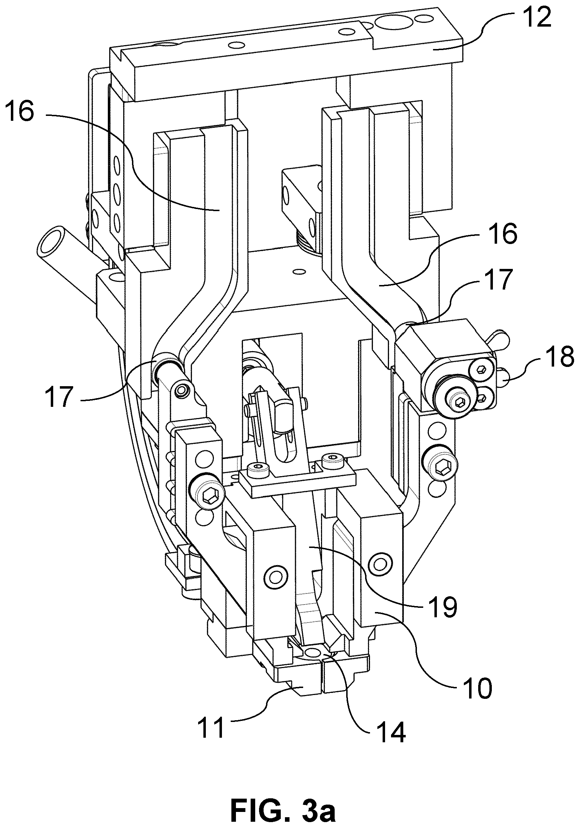

Figures 3a-3c show three perspective, elevational and profile views, respectively, of the feed system of the invention, in a second preferred embodiment thereof. In said figures, the head of said system comprises a pair of housing clamps, the movement of which is operated by means of the relative movement of the upper electrode and of the guide cylinder.

**Reference numbers used in the drawings:**

| | |
|---|---|
| (1) | Press welder for resistance welding |
| (2) | Welding cylinder |
| (3) | Upper electrode |
| (4) | Lower electrode |
| (5) | Centering pin |
| (6) | Guide cylinder |
| (7) | Attachment element between welding cylinder and guide cylinder |
| (8) | Feed tube |
| (9) | Chute |
| (10) | Head |
| (11) | Clamps |
| (12) | Guide piston |
| (13) | Movement stop for the guide piston |
| (14) | Welding nut |
| (15) | Closure spring of the clamps |
| (16) | Cam tracks |
| (17) | Bearings |
| (18) | Manual opening mechanism for the clamps |
| (19) | Component metering mechanism |
| (20) | Detector of the number of fed components |
| (21) | Detector on the position of the welding cylinder |

### DETAILED DESCRIPTION OF THE INVENTION

A detailed description of the invention in reference to a preferred embodiment thereof, illustrated by Figures 1-3 herein, is provided below. Said description is provided for purposes of illustrating but not limiting the claimed invention.

As described in the preceding sections, the invention preferably relates to a component feed system (1), typically a nut feed system, particularly suitable for use in press welders for resistance welding. As described in the preceding sections, said press welders generally consist of a welding cylinder (2) attached to an upper electrode (3), and of a lower electrode (4) at the end of which there is arranged an element centering pin (5). Said centering pin (5) is also configured for favoring the positioning of the components when they are arranged on the lower electrode (4). In turn, the welding cylinder (2) can move along an axis in an integral manner together with the upper electrode (3), and the lower electrode (4) is also arranged on said axis. Therefore, by means of the movement of the welding cylinder (2), it is possible to vary the relative position of both electrodes (3, 4) along the axis. In this configuration, the operation of the press welder generally comprises the arrangement of the two components to be welded (for example, a laminar sheet metal component and a nut), aligned along the axis by means of the centering pin (5), and subsequently the movement of the upper electrode (3) against the lower electrode (4), exerting pressure on the assembly formed by the two components. In this position, high-intensity electric current is passed over the components, said current being generated between the electrodes (3, 4). Therefore, the welding of the components will be determined by the combination of the mechanical pressure exerted by the pushing force of the mentioned upper electrode (3) against the lower electrode (4), and of the thermal energy generated by the passage of the electric current between the components.

In the previous context, the system of the invention is proposed as a series of additional elements which are added to the press welder (1), and which allow small sized components (preferably nuts) on the centering pin (5) to be fed automatically, as well as the positioning thereof in an optimal manner on the assembly of elements to be welded. As stated, the mentioned system is applicable in both manual and robotic press welders (1).

To obtain the automatic feeding of the components, the press welder (1) is equipped with a guide cylinder (6), which is connected to the welding cylinder (2) by means of an attachment element (7) adapted for that purpose (for example, by means of an assembly of mechanized flats, brackets, or components), wherein the axes of movement of both cylinders (2, 6) are substantially parallel. Likewise, in different embodiments of the invention, the cylinders can move by pneumatic, hydraulic, or mechanical actuation, or by any other equivalent means.

The system of the invention preferably has a feed tube (8) through which the components to be welded circulate, wherein at least one segment of said tube can present a curved layout, adopting the form of a chute (9). More preferably, the cross-section of the tube (8) and/or of the chute (9) can present a shape adapted to the geometry of the components, such that said components circulated through said tube (8) and said chute (9) in an oriented manner, favoring the better placement thereof relative to the lower electrode (4) and the centering pin (5). The driving force for the components as they travel through the tube (8) and the chute (9) is preferably obtained by means of compressed air pressure, for example as a result of a component blow feeder. Said driving force is also supplied by the action of gravity, for example through the falling of the components through the chute (9).

The travel of the components ends at a head (10) connected to the tube (8) and/or to the chute (9), wherein said head (10) is arranged in a lower position than the position of the welding cylinder (2), being aligned with same on its axis of movement and also coinciding with the axis of alignment of the electrodes (3, 4). The head (10) advantageously comprises a cradle-type housing for the fed components, which is formed by two actuatable clamps (11). Therefore, when the clamps (11) are in the closed position, the fed component is received and remains housed in the head. Likewise, when the clamps (11) are actuated and transition to an open position, the component falls by gravity, leaving the head (11). As will be explained below, the actuation of said clamps (11), favoring the opening thereof, causes the fed component to be arranged on the centering pin (5) of the lower electrode (4), the instant prior to performing the welding, and in an optimal position for said welding (as a result of the prior placement favored by the tube (8) and the chute (9), and the synergistic action applied by the upper electrode (3) as it applies pressure on the head (10), which causes the clamps (11) to open, placing the component at the same time. As will also be described below, the free space left by the clamps (11) when they are open should preferably be enough for the upper electrode (3) to go through said space during the welding operation, driven by the corresponding cylinder (2) as a result of the movement thereof. As mentioned above, the guide cylinder (6) is connected to the welding cylinder (2) by means of an attachment element (7), such that both cylinders (2, 6) move in an integral manner. According to the present invention, the guide cylinder (6) is connected to a guide piston (12), in which the head (10) is arranged. The relative distance between the guide cylinder (6) and the head (10) can thereby be varied through the movement of the piston (12) along the guide cylinder (6). In addition to these elements, the guide piston (12) comprises according to the present invention a movement stop (13) limiting the movement of said piston (12), at least in the downward direction. The synergistic action of the cylinders (2, 6) of the piston (12) and of the stop (13) favor the component feeding and placement operation, as well as the subsequent welding operation. Said operation is described in the following paragraphs for a preferred embodiment of the invention in which the welding components comprise nuts (14).

In a standby state (corresponding to a component feeding phase prior to component welding), the welding cylinder (2) is in the retraction/compression position, with the upper electrode (3) being located away from the lower electrode (4), at a height above the height of the head (10). Likewise, in said standby state, the cylinder (6) and the guide piston (12) are in the extended position, there being a maximum relative distance between same. With this configuration, the nut (14) is blown through the tube (8) and, where appropriate, the chute (9), until said nut (14) reaches the head (10), being received, and housed between its clamps (11), which remain closed during the feeding phase.

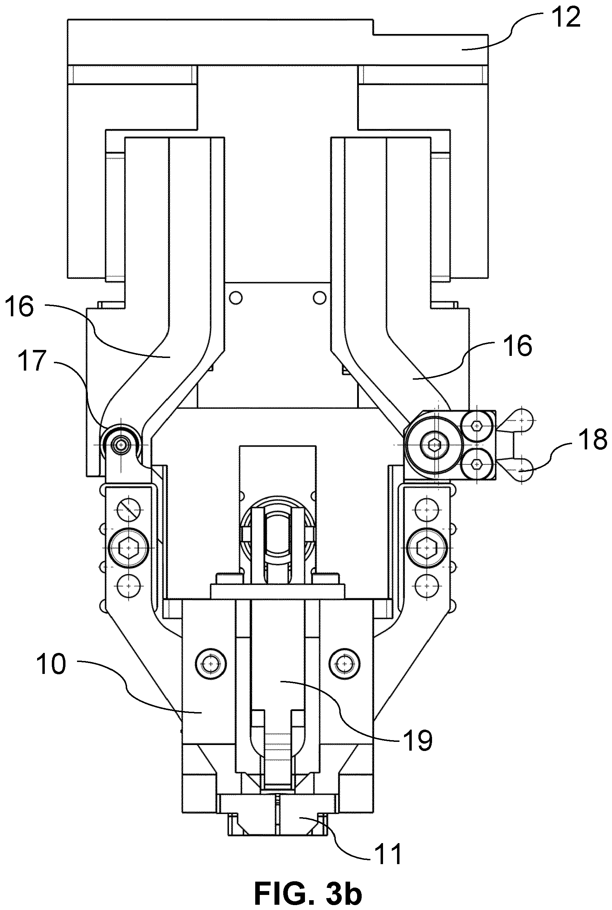

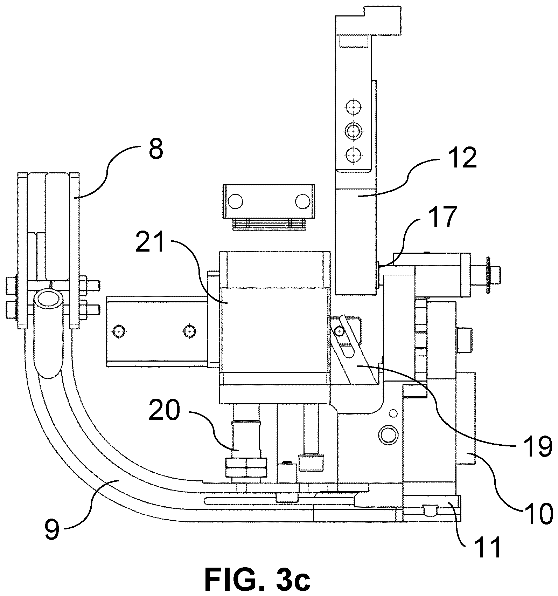

Being the head (10) fed with the nut (14), it is possible to arrange another welding component (for example, a sheet metal to which the nut (14) will be welded) on the lower electrode (4), preferably aligned using the centering pin (5). It is thereby possible to initiate the welding operation, which involves the following steps:
- The movement of the welding cylinder (2) is actuated, which causes the upper electrode (3) to move in a downward manner towards the lower electrode (4), with the head (10) being positioned between same. Together with the movement of the welding cylinder (2), the guide cylinder (6) will move in an integral manner with same, as a result of transmitting said movement through the attachment element (7).
- When the guide piston (12) reaches the end of its travel, marked by the movement stop (13), said piston (12) remains stopped, while the guide cylinder (6) continues moving in an integral manner together with the welding cylinder (2) and the upper electrode (3). As a result, the assembly formed by the guide cylinder (6) and the piston (12) transitions from an extended configuration to a retracted/compressed configuration, and the upper electrode (3) progressively moves closer to the position of the head (10), and namely its clamps (11).
- When the upper electrode (3) contacts the clamps (11), the latter start to open as a consequence of the pressure exerted by said electrode (3). Alternatively, the opening of the clamps can be regulated based on the position of the upper electrode (3), by means of a mechanism adapted for that purpose, without the need for said electrode (3) to apply pressure on the clamps (for example, by means of the connection of the clamps to a cam-type mechanism, as described below, by way of example, for the embodiment of Figure 3). Additionally, when the clamps (11) open sufficiently, they allow the nut (14) to fall onto the reciprocal component to which it will be welded, in the optimal position and with both components being aligned as a result of the centering pin (5), which will be arranged through same.
- The forward movement of the welding cylinder (2), of the upper electrode (3) and of the guide cylinder (6) will continue while the position of the piston (12) remains fixed, as a result of the stop (13), favoring the upper electrode (3) reaching a lower position than the position of the head (10), going through the space existing between the clamps (11) as a consequence of their opening. Said forward movement is stopped when the end of the upper electrode (3) again contacts the assembly formed by the nut (14) and the reciprocal component to which it is to be welded, which is positioned on the lower electrode (4), aligned by means of the centering pin (5).
- At this point, the pressure on said assembly continues and is combined with the activation of the current between both electrodes (3, 4), which causes the welding of the nut (14) and the reciprocal component by pressure.
- Once the components are welded, the reverse upward travel of the cylinders (2, 6) and of the piston (12) is performed (upon reaching again the point of travel marked by the stop (13), at which time the piston (12) and the guide cylinder (6) start to move from the prior compressed configuration to the extended configuration), until the system goes back to its standby state. Preferably, when the upper electrode (3) is no longer contacting the clamps (11) (as the end thereof has reached a higher position than the position of said clamps (11)), said clamps return to the closed position (for example, by means of a spring mechanism (15) provided therein).
- After returning to the standby state, it is possible to feed a new nut (14) into the system and perform a new welding operation, also replacing the reciprocal component with another one on the lower electrode (4) and performing the previous steps again.

In another preferred embodiment of the invention, illustrated by Figures 3a-3c, the opening mechanism for opening the clamps (11) comprises respective cam tracks (16), along which respective bearings (17) connected to said clamps (11) run. With this configuration, the relative position between the welding cylinder (3) and the guide cylinder (6) defines the position of the bearings (17) along the cam tracks (16), therefore operating the opening of the clamps (11) along the downward path of the welding cylinder (3). Conversely, when said welding cylinder (3) moves backward, this will operate the closing of the clamps (11) as the bearings (17) run along the opposite path in the cam tracks (16).

In another preferred embodiment of the invention, the opening mechanism for opening the clamps (11) comprises a manual opening mechanism (18) performed, for example, by means of a regulating device for regulating the position of said clamps (11), through a wing nut type closure or the like.

In another preferred embodiment of the invention, the feed system comprises a nut metering mechanism (19), preferably a cam-type mechanism, suitable for separating the fed components on a feed path (for example, on the feed path defined by the feed tube (8) and/or the chute (9)). More preferably (see Figure 3c), said cam-type mechanism (19) is connected to a first detector (20), preferably an inductive detector, suitable for detecting the number of feed components located in a given portion of the chute (9), and/or to a second detector (21), preferably a magnetic detector, suitable for detecting the position of the welding cylinder (3). It is thereby possible to configure the component metering regimen of the cam mechanism (19) based on the number of accumulated components or on the position of the mentioned cylinder (3) during welding operations.

## Claims

1. A component feed system for a press welder (1) for resistance welding, wherein said press is of the type comprising:
- a welding cylinder (2) connected to an upper electrode (3);
- a lower electrode (4), equipped with a centering pin (5);
wherein the upper electrode (3) and the lower electrode (4) are aligned along an axis on which the upper electrode (3) can move, moving closer to or away from the lower electrode (4), by means of the actuation of the welding cylinder (2);
wherein the system comprises:
- a component feed tube (8) connectable to a piece of equipment for feeding said components;
- a component feed head (10) connected to the tube (8), wherein said head (10) is arranged on the axis defined by the electrodes (3, 4), at a height above the height of the lower electrode (4);
wherein said head is equipped with housing clamps (11) for housing the components coming from the tube (8); wherein said clamps (11) comprise an opening mechanism, with said opening mechanism being operable by means of the pressure or the downward movement performed by the upper electrode (3); and wherein the separation of the clamps (11), once opened, is such that it allows the passage of the upper electrode (3) therethrough in said movement;
and **characterized in that:**
the system further comprises a guide cylinder (6) connected to the head (10), and wherein said guide cylinder (6) is in an integral manner attached to the welding cylinder (2) through an attachment element (7);
wherein the connection between the guide cylinder (6) and the head (10) is performed by means of a guide piston (12), wherein said piston (12) can move relative to the guide cylinder (6), along an axis substantially parallel to the axis of movement of the welding cylinder (2); and
wherein the guide piston (12) comprises a movement stop (13), wherein said stop (13) configures a retention position for the guide piston (12), after which said piston is moved backward relative to the guide cylinder (6) given the forward movement of the welding cylinder (2) and of the upper electrode (3), relative to the lower electrode (4).

2. The system according to the preceding claim, wherein the opening mechanism for opening the clamps (11) comprises at least one spring (15) connected to same.

3. The system according to any of the preceding claims, wherein the opening mechanism for opening the clamps (11) comprises respective cam tracks (16), along which respective bearings (17) connected to said clamps (11) run.

4. The system according to the preceding claim, wherein the opening mechanism for opening the clamps (11) is adapted such that the relative position between the welding cylinder (3) and the guide cylinder (6) defines the position of the bearings (17) along the cam tracks (16), operating the degree of opening of the clamps (11) along the upward or downward path of the welding cylinder (3).

5. The system according to any of the preceding claims, wherein the opening mechanism for opening the clamps (11) further comprises a manual opening mechanism (18), comprising a regulating device for regulating the position of said clamps (11).

6. The system according to any of the preceding claims, comprising a cam-type nut metering mechanism (19), suitable for separating one or more components arranged on a feed path.

7. The system according to the preceding claim, wherein the metering mechanism (19) is connected to an inductive detector (20), suitable for detecting the number of feed components located in a given portion of the feed path, and/or to a magnetic detector (21), suitable for detecting the position of the welding cylinder (3).

8. The system according to any of the preceding claims, wherein:
- the tube (8) and the head (10) are connected through a chute (9);
- the tube (8) presents a cross-section adapted to the shape of the fed components;
- the axis of movement of the welding cylinder (2) is substantially vertical;
- the component feeding equipment comprises a blow feeder; and/or
- the component feeding equipment is an automatic feeder.

9. The system according to any of the preceding claims, wherein the fed components are nuts (14).

10. A press welder (1) for resistance welding comprising:
- a welding cylinder (2) connected to an upper electrode (3);
- a lower electrode (4), equipped with a centering pin (5);
wherein the upper electrode (3) and the lower electrode (4) are aligned along an axis on which the upper electrode (3) can move, moving closer to or away from the lower electrode (4), by means of the actuation of the welding cylinder (2);
**characterized in that** the press welder (1) further comprises a component feed system according to any of the preceding claims.

11. The press welder (1) according to the preceding claim, further comprising a robotic subsystem for the placement of reciprocal components relative to the fed components fed by the feed system, said subsystem being configured for arranging said reciprocal components on the lower electrode (4).

12. The press welder (1) according to claim 10, wherein said press comprises a manual subsystem for the placement of reciprocal components relative to the fed components fed by the feed system, said subsystem being configured for arranging said reciprocal components on the lower electrode (4).

## Patentansprüche

1. Bauteilzuführungssystem für ein Pressschweißgerät (1) zum Widerstandsschweißen, wobei die Presse von dem Typ ist, der Folgendes umfasst:
- einen Schweißzylinder (2), der mit einer oberen Elektrode (3) verbunden ist;
- eine untere Elektrode (4), die mit einem Zentrierstift (5) ausgerüstet ist;
wobei die obere Elektrode (3) und die untere Elektrode (4) entlang einer Achse ausgerichtet sind, auf der sich die obere Elektrode (3) durch Betätigen des Schweißzylinders (2) auf die untere Elektrode (4) zu oder von dieser weg bewegen kann;
wobei das System Folgendes umfasst:
- ein Bauteilzuführungsrohr (8), das mit einem Teil der Ausrüstung zum Zuführen der Bauteile verbunden werden kann;
- einen Bauteilzuführungskopf (10), der mit dem Rohr (8) verbunden ist, wobei der Kopf (10) auf der durch die Elektroden (3, 4) definierten Achse in einer Höhe oberhalb der Höhe der unteren Elektrode (4) angeordnet ist;
wobei der Kopf mit Aufnahmeklammern (11) zur Aufnahme der von dem Rohr (8) kommenden Bauteile ausgerüstet ist; wobei die Klammern (11) einen Öffnungsmechanismus umfassen, wobei der Öffnungsmechanismus mittels des Drucks oder der Abwärtsbewegung, ausgeführt durch die obere Elektrode (3), betätigbar ist; und wobei die Trennung der Klammern (11), sobald sie geöffnet sind, derart ist, dass sie den Durchgang der oberen Elektrode (3) bei der Bewegung ermöglicht;
und **dadurch gekennzeichnet, dass:**
das System ferner einen Führungszylinder (6) umfasst, der mit dem Kopf (10) verbunden ist, wobei der Führungszylinder (6) einstückig mit dem Schweißzylinder (2) durch ein Befestigungselement (7) verbunden ist;
wobei die Verbindung zwischen dem Führungszylinder (6) und dem Kopf (10) mittels eines Führungskolbens (12) durchgeführt wird, wobei der Kolben (12) sich relativ zu dem Führungszylinder (6) entlang einer im Wesentlichen parallel zu der Bewegungsachse des Schweißzylinders (2) verlaufenden Achse bewegen kann; und
wobei der Führungskolben (12) einen Bewegungsanschlag (13) umfasst, wobei der Anschlag (13) eine Halteposition für den Führungskolben (12) ausbildet, nach der der Kolben relativ zu dem Führungszylinder (6) zurückbewegt wird, wobei die Vorwärtsbewegung des Schweißzylinders (2) und der oberen Elektrode (3) relativ zu der unteren Elektrode (4) gegeben ist.

2. System nach dem vorhergehenden Anspruch, wobei der Öffnungsmechanismus zum Öffnen der Klammern (11) mindestens eine mit diesem verbundene Feder (15) umfasst.

3. System nach einem der vorhergehenden Ansprüche, wobei der Öffnungsmechanismus zum Öffnen der Klammern (11)jeweilige Nockenbahnen (16) umfasst, entlang derer jeweilige mit den Klammern (11) verbundene Lager (17) verlaufen.

4. System nach dem vorhergehenden Anspruch, wobei der Öffnungsmechanismus zum Öffnen der Klammern (11) so ausgelegt ist, dass die relative Position zwischen dem Schweißzylinder (3) und dem Führungszylinder (6) die Position der Lager (17) entlang der Nockenbahnen (16) definiert, die den Öffnungsgrad der Klammern (11) entlang des Aufwärts- oder Abwärtswegs des Schweißzylinders (3) steuern.

5. System nach einem der vorhergehenden Ansprüche, wobei der Öffnungsmechanismus zum Öffnen der Klammern (11) ferner einen manuellen Öffnungsmechanismus (18) umfasst, der eine Reguliervorrichtung zum Regulieren der Position der Klammern (11) umfasst.

6. System nach einem der vorhergehenden Ansprüche, welches einen nockenartigen Mutterdosiermechanismus (19) umfasst, der geeignet ist, ein oder mehrere auf einem Zuführungsweg angeordnete Bauteile zu vereinzeln.

7. System nach dem vorhergehenden Anspruch, wobei der Dosiermechanismus (19) mit einem induktiven Detektor (20) verbunden ist, der geeignet ist, die Anzahl der in einem bestimmten Abschnitt des Zuführungsweges befindlichen Bauteile zu detektieren, und/oder mit einem magnetischen Detektor (21), der geeignet ist, die Position des Schweißzylinders (3) zu detektieren.

8. System nach einem der vorhergehenden Ansprüche, wobei:
- das Rohr (8) und der Kopf (10) durch eine Rutsche (9) verbunden sind;
- das Rohr (8) einen Querschnitt aufweist, der an die Form der zugeführten Bauteile ausgelegt ist;
- die Bewegungsachse des Schweißzylinders (2) im Wesentlichen vertikal ist;
- die Ausrüstung zum Zuführen von Bauteilen eine Blaszuführvorrichtung umfasst; und/oder
- die Ausrüstung zum Zuführen von Bauteilen eine automatische Zuführvorrichtung ist.

9. System nach einem der vorhergehenden Ansprüche, wobei die zugeführten Bauteile Muttern (14) sind.

10. Pressschweißgerät (1) zum Widerstandsschweißen, Folgendes umfassend:
- einen Schweißzylinder (2), der mit einer oberen Elektrode (3) verbunden ist;
- eine untere Elektrode (4), die mit einem Zentrierstift (5) ausgerüstet ist;
wobei die obere Elektrode (3) und die untere Elektrode (4) entlang einer Achse ausgerichtet sind, auf der sich die obere Elektrode (3) durch Betätigen des Schweißzylinders (2) auf die untere Elektrode (4) zu oder von dieser weg bewegen kann;
**dadurch gekennzeichnet, dass** das Pressschweißgerät (1) ferner ein Bauteilzuführungssystem nach einem der vorhergehenden Ansprüche umfasst.

11. Pressschweißgerät (1) nach dem vorhergehenden Anspruch, ferner ein Roboter-Untersystem zum Platzieren von reziproken Bauteilen relativ zu den durch das Zuführungssystem zugeführten Bauteilen umfassend, wobei das Untersystem zum Anordnen der reziproken Bauteile auf der unteren Elektrode (4) ausgebildet ist.

12. Pressschweißgerät (1) nach Anspruch 10, wobei die Presse ein manuelles Untersystem zum Platzieren von reziproken Bauteilen relativ zu den durch das Zuführungssystem zugeführten Bauteilen umfasst, wobei das Untersystem zum Anordnen der reziproken Bauteile auf der unteren Elektrode (4) ausgebildet ist.

## Revendications

1. Système d'alimentation en composants pour une presse à souder (1) pour le soudage par résistance, dans lequel ladite presse est du type comprenant :
- un cylindre de soudage (2) relié à une électrode supérieure (3) ;
- une électrode inférieure (4), équipée d'une goupille de centrage (5) ;
dans lequel l'électrode supérieure (3) et l'électrode inférieure (4) sont alignées le long d'un axe sur lequel l'électrode supérieure (3) peut se déplacer, en se rapprochant ou en s'éloignant de l'électrode inférieure (4), au moyen de l'actionnement du cylindre de soudage (2) ;
dans lequel le système comprend :
- un tube d'alimentation en composants (8) pouvant être relié à une pièce d'équipement pour l'alimentation desdits composants ;
- une tête d'alimentation en composants (10) reliée au tube (8), dans lequel ladite tête (10) est disposée sur l'axe défini par les électrodes (3, 4), à une hauteur supérieure à l'hauteur de l'électrode inférieure (4) ;
dans lequel ladite tête est équipée de pinces de logement (11) pour loger les composants provenant du tube (8) ; dans lequel lesdites pinces (11) comprennent un mécanisme d'ouverture, ledit mécanisme d'ouverture pouvant être actionné au moyen de la pression ou du mouvement vers le bas effectué par l'électrode supérieure (3) ; et dans lequel la séparation des pinces (11), une fois ouvertes, est telle qu'elle permet le passage de l'électrode supérieure (3) au travers de celle-ci dans ce mouvement ;
et **caractérisé en ce que :**
le système comprend en outre un cylindre de guidage (6) relié à la tête (10), et dans lequel ledit cylindre de guidage (6) est fixé de manière intégrale au cylindre de soudage (2) par l'intermédiaire d'un élément de fixation (7) ;
dans lequel la liaison entre le cylindre de guidage (6) et la tête (10) est réalisée au moyen d'un piston de guidage (12), dans lequel ledit piston (12) peut se déplacer par rapport au cylindre de guidage (6), le long d'un axe sensiblement parallèle à l'axe de déplacement du cylindre de soudage (2) ; et
dans lequel le piston de guidage (12) comprend une butée de mouvement (13), dans lequel ladite butée (13) configure une position de rétention pour le piston de guidage (12), après quoi ledit piston est déplacé vers l'arrière par rapport au cylindre de guidage (6) étant donné le mouvement vers l'avant du cylindre de soudage (2) et de l'électrode supérieure (3), par rapport à l'électrode inférieure (4).

2. Système selon la revendication précédente, dans lequel le mécanisme d'ouverture pour l'ouverture des pinces (11) comprend au moins un ressort (15) relié à celui-ci.

3. Système selon l'une quelconque des revendications précédentes, dans lequel le mécanisme d'ouverture pour l'ouverture des pinces (11) comprend des chemins de came respectifs (16), le long desquels se déplacent des roulements respectifs (17) reliés auxdites pinces (11).

4. Système selon la revendication précédente, dans lequel le mécanisme d'ouverture pour l'ouverture des pinces (11) est adapté de telle sorte que la position relative entre le cylindre de soudage (3) et le cylindre de guidage (6) définit la position des roulements (17) le long des chemins de came (16), actionnant le degré d'ouverture des pinces (11) le long de la trajectoire ascendante ou descendante du cylindre de soudage (3).

5. Système selon l'une quelconque des revendications précédentes, dans lequel le mécanisme d'ouverture pour l'ouverture des pinces (11) comprend en outre un mécanisme d'ouverture manuelle (18), comprenant un dispositif de régulation pour régler la position desdites pinces (11).

6. Système selon l'une quelconque des revendications précédentes, comprenant un mécanisme de dosage des écrous à came (19), apte à séparer un ou plusieurs composants disposés sur une trajectoire d'alimentation.

7. Système selon la revendication précédente, dans lequel le mécanisme de dosage (19) est relié à un détecteur inductif (20), apte à détecter le nombre de composants d'alimentation situés dans une portion donnée de la trajectoire d'alimentation, et/ou à un détecteur magnétique (21), apte à détecter la position du cylindre de soudage (3).

8. Système selon l'une quelconque des revendications précédentes, dans lequel :
- le tube (8) et la tête (10) sont reliés par une goulotte (9) ;
- le tube (8) présente une section transversale adaptée à la forme des composants alimentés ;
- l'axe de déplacement du cylindre de soudage (2) est sensiblement vertical ;
- l'équipement d'alimentation en composants comprend un dispositif d'alimentation par soufflage ; et/ou
- l'équipement d'alimentation en composants est un dispositif d'alimentation automatique.

9. Système selon l'une quelconque des revendications précédentes, dans lequel les composants alimentés sont des écrous (14).

10. Presse à souder (1) pour le soudage par résistance, comprenant :
- un cylindre de soudage (2) relié à une électrode supérieure (3) ;
- une électrode inférieure (4), équipée d'une goupille de centrage (5) ;
dans laquelle l'électrode supérieure (3) et l'électrode inférieure (4) sont alignées le long d'un axe sur lequel l'électrode supérieure (3) peut se déplacer, en se rapprochant ou en s'éloignant de l'électrode inférieure (4), au moyen de l'actionnement du cylindre de soudage (2) ;
**caractérisée en ce que** la presse à souder (1) comprend en outre un système d'alimentation en composants selon l'une quelconque des revendications précédentes.

11. Presse à souder (1) selon la revendication précédente, comprenant en outre un sous-système robotique pour le placement de composants réciproques par rapport aux composants alimentés par le système d'alimentation, ledit sous-système étant configuré pour disposer lesdits composants réciproques sur l'électrode inférieure (4).

12. Presse à souder (1) selon la revendication 10, dans laquelle ladite presse comprend un sous-système manuel pour le placement des composants réciproques par rapport aux composants alimentés par le système d'alimentation, ledit sous-système étant configuré pour disposer lesdits composants réciproques sur l'électrode inférieure (4).
